# EUROPÄISCHE PATENTANMELDUNG

(11) **EP 1 921 364 A1**
(43) Veröffentlichungstag der Anmeldung: **14.05.2008**
(21) Anmeldenummer: 06123609.7
(22) Anmeldetag: 07.11.2006
(51) Int. Cl.: F16L 19/065, F16L 47/04

(54) **Klemmfitting für ein Rohr, insbesondere Heizungs- und/oder Sanitärrohr**

(71) Anmelder: Uponor Innovation AB, 513 81 Fristad (SE)
(72) Erfinder: Kaufmann, Bernd, 97437 Hassfurt (DE)
(74) Vertreter: Hilleringmann, Jochen

(57) **Zusammenfassung**

Der Klemmfitting (10) ist einem Fittingkörper (12) versehen, der eine Stützhulse (16), auf welche ein Rohrende (66) aufschiebbar ist, und eine konusförmige Anlagefläche (20) aufweist. Ferner weist der Klemmfitting (10) ein Gegenstück (24) für den Fittingkörper (12) auf, welches mit einer konusförmigen Aufnahmefläche (22) zur Anlage durch die Anlagefläche (20) des Fittingkörpers (12) versehen ist. Der Klemmftting (10) ist mit einem Klemmring (40) zum Umgeben des auf die Stützhtilse (16) aufschiebbaren Rohrendes (66) und einer ein Innengewinde (44) aufweisenden und mit dem Gegenstück (24) verschraubbaren Überwurfmutter (42) zum Andrücken des Klemmrings (40) gegen den Fittingkörper (12) und zur klemmenden Anlage an dem Rohrende (66) in dessen auf die Stützhülse (16) aufgeschobenen Zustand versehen. Die Stützhülse (16) und der Klemmring (40) sind einteilig ausgebildet, wobei der Klemmring (40) ein radial stauchbares Material aufweist und/oder derart ausgebildet ist, dass er radial stauchbar ist.

## Beschreibung

Die Erfindung betrifft einen Klemmfitting für ein Rohr, wie z.B. ein Heizungs- und/oder Sanitärrohr, bei dem das Rohrende mittels eines Klemmrings gegen eine Stützhülse des Fittingkörpers geklemmt wird, wobei die Klemmkraft durch Verschraubung einer Überwurfmutter mit einem den Fittingkörper aufnehmenden Gegenstück aufgebracht wird.

Klemmfittinge der vorstehend beschriebenen Art (teilweise auch als Schraubfittinge bezeichnet) sind im Stand der Technik grundsätzlich bekannt und z.B. in DE-A-199 34 093, DE-U-93 15 601, DE-U-203 13 506, WO-A-2006/097409 und US-A-3 830 531 beschrieben. Sie weisen die oben genannten Elemente als einzelne Komponenten auf, die vor Ort montiert werden müssen. Dies ist relativ mühselig und zeitaufwendig. Außerdem besteht die Gefahr, dass beim Transport des Klemmfittings Einzelteile desselben verloren gehen.

In DE-A-197 52 528 ist eine Anschlusssteckvorrichtung für Kunststoffrohre beschrieben, bei der das Kunststoffrohr in den Ringraum eines Adapters eingeschoben wird, der zwischen einem Aufschraubgehäuse und einer Konusanschlusseinheit angeordnet ist, die miteinander verschraubt sind. Die Sicherung des Rohres gegen axiale Zugkräfte erfolgt durch einen Schneidring, der sich in der Außenseite des Rohres verkrallt.

Der Erfindung liegt die Aufgabe zu Grunde, einen Klemmfitting für ein Rohr, insbesondere ein Heizungs- und/oder Sanitärrohr zu schaffen, bei dem die Montage des Klemmfittings auf das anzuschließende Rohr vereinfacht ist.

Zur Lösung dieser Aufgabe wird mit der Erfindung ein Klemmfitting für ein Rohr, insbesondere ein Heizungs- und/oder Sanitärrohr vorgeschlagen, der versehen ist mit
- einem Fittingkörper, der eine Stützhülse, auf welche ein Rohrende aufschiebbar ist, und eine konusförmige Anlagefläche aufweist,
- einem Gegenstück für den Fittingkörper, welches mit einer konusförmigen Aufnahmefläche zur Anlage durch die Anlagefläche des Fittingkörpers versehen ist,
- einem Klemmring zum Umgeben des auf die Stützhülse aufschiebbaren Rohrendes und
- einer ein Innengewinde aufweisenden und mit dem Gegenstück verschraubbaren Überwurfmutter zum Andrücken des Klemmrings gegen den Fittingkörper und zur klemmenden Anlage an dem Rohrende in dessen auf die Stützhülse aufgeschobenen Zustand,
- wobei die Stützhülse und der Klemmring einteilig ausgebildet sind, wobei der Klemmring ein radial stauchbares Material aufweist und/oder derart ausgebildet ist, dass er radial stauchbar ist.

Nach der Erfindung sind die Stützhülse und der Klemmring einteilig ausgeführt. Dadurch reduziert sich der Montageaufwand zum Montieren bzw. Vormontieren des Klemmfitting, indem die zuvor voneinander getrennten Stützhülse und Klemmring nunmehr als ein Teil gehandhabt werden können. Diese beiden Teile sind fest und insbesondere einstückig miteinander verbunden. Die Verbindung ist kraftschlüssig, was durch einen Reibschluss, einen Formschluss oder durch einen Stoffschluss realisiert werden kann.

Des weiteren vorteilhaft auf die Herstellung des erfindungsgemäßen Fittings wirkt sich aus, dass für die Montage weniger Werkzeuge benötigt werden, da beide Komponenten, d.h. Stützhülse und Klemmring mit einem einzigen Werkzeug produziert werden können, Ebenso werden wenige Produktionsabläufe, weniger Spritzgießmaschinen u.dgl, benötigt. Dadurch wird insgesamt die Herstellung kostengünstiger.

Ein weiterer Vorteil, der mit dem erfindungsgemäßen Konzept verbunden ist, kann darin gesehen werden, dass auf Grund der festen Verbindung des Klemmrings mit der Stützhülse der Klemmring beim Festziehen des Klemmfittings nicht mehr in Umfangsrichtung relativ zum anzuschließenden Rohr sich verschieben kann, also Torsionsmomente des Klemmrings nicht auf das Rohr übertragen werden.

Als bevorzugtes Material für die Einheit aus Stützhülse und Klemmring kommt insbesondere Kunststoff in Frage. Geeignete Polymermaterialien sind beispielsweise PA, PVDF, PPSU und PSU. Die Einheit aus Stützhülse und Klemmring kann auch verschiedene Kunststoffmaterialien für die beiden Elemente Stützhülse und Klemmring aufweisen. So kann es beispielsweise von Vorteil sein, zwei verschiedene Polymere (beispielsweise PPSU für die Stützhülse und PA für den Klemmring) zu verwenden.

Die bevorzugte Herstellung der Einheit aus Stützhülse und Klemmring ist der Spritzguss. Werden unterschiedliche Kunststoffmaterialien verwendet, so kann ein Zwei-Komponenten-Spritzgießverfahren eingesetzt werden. Das Ergebnis ist ein Zwei-Komponenten-Spritzgussteil, das die Stützhülse und den Klemmring repräsentiert.

Bevorzugt ist der Klemmring in Umfangsrichtung geschlossen ausgebildet, wobei auch sein dem Gegenstück abgewandter Umfangsrand geschlossen ist. Die Klemmwirkung erfolgt dabei ausschließlich durch Stauchung bzw. Verformung des Klemmrings, Alternativ kann der Klemmring geschlitzt sein, also beispielsweise einzelne Zungen aufweisen, die sich infolge der radial einwärts wirkenden Anpresskraft beim Festschrauben des Klemmfittings von außen gegen das anzuschließende Rohr legen und dieses fixieren sowie gegen die Stützhülse drücken und damit für den erforderlichen Dichtigkeitsanpressdruck sorgen.

Bei einer weiteren vorteilhaften Ausgestaltung des erfindungsgemäßen Klemmfittings sind der Fittingkörper mit Stützhülse und konusförmiger Anlagefläche und damit die Stützhülse und der Klemmring in der Überwurfmutter gegen ein Herausfallen gesichert. Dies wird durch vom Fittingkörper radial vorstehende Fixiervorsprünge realisiert, die mit dem Innengewinde der Überwurfmutter zusammenwirken und ein unbeabsichtigtes Herausfallen bzw. Ablösen von Fittingkörper und dessen Stützhülse umgebenden Klemmring verhindern.

In vorteilhafter Weiterbildung der Erfindung ist vorgesehen, dass der Fittingkörper mit Stützhülse und/oder der Klemmring ein Kunststoffmaterial aufweist/aufweisen. Dieses Kunststoffmaterial ist zweckmäßigerweise faserverstärkt.

Bei einer anderen vorteilhaften Weiterbildung der Erfindung weist die konusförmige Anlagefläche des Fittingkörpers Zentriervorsprünge auf, die der Anpassung des Gegenstücks für den Fittingkörper dienen, wenn die konusförmige Aufnahmefläche des Gegenstücks einen vom Konuswinkel der Anlagefläche des Fittingkörpers abweichenden Konuswinkel aufweist. Die Anlageflächen, die zweckmäßigerweise als Vorsprünge in demjenigen Bereich ausgebildet sind, welcher sich bei Anlage des Fittingkörpers am Gegenstück außerhalb von dessen Aufnahmefläche befindet, dienen dazu, dass ein zu tiefes Eintauchen der Fittingkörper-Anlagefläche in die konusförmige Aufnahmefläche des Gegenstücks verhindert wird. Sollte nämlich die konusförmige Anlagefläche des Fittingkörpers zu weit in die konusförmige Aufnahmefläche des Gegenstücks eingetaucht sein, so besteht die Gefahr, dass die Überwurfmutter bis zur Aufbringung der auf den Klemmring wirkenden Andrückkraft bereits bis nahe an ihren Endanschlag auf das Gegenstück aufgeschraubt ist.

In weiterer vorteilhafter Ausgestaltung der Erfindung ist vorgesehen, dass die Überwurfmutter und der Fittingkörper konusförmige Andrückflächen zum Zusammenwirken mit Schrägflächen an den axialen Enden des Klemmrings aufweisen und dass der Konuswinkel der Andrückfläche des Fittingkörpers kleiner ist als der der Andrückfläche der Überwurfmutter. Hierdurch erfolgt eine ganz gezielte Verformung des Klemmrings und des Rohres in dessen verpressten Zustand, was zu einer axialen Zugsicherung und zu einer zuverlässigen Abdichtung des Anschlussendes des Rohres an der Stützhülse führt.

Ferner kann die Stützhülse mindestens eine Umfangsnut mit einem von dieser aufgenommenen Dichtelement zur dichtenden Anlage an der Innenfläche des anzuschließenden Rohrendes aufweisen. Ein Dichtelement, das von einer Umfangsnut aufgenommen ist, kann sich auch an dem verjüngten Konusende des Fittingkörpers oder innerhalb eines sich an das verjüngte Konusende des Fittingkörpers anschließenden Abschnitts des Fittingkörpers befinden.

Der erfindungsgemäße Klemmfitting eignet sich für Rohre aus beliebigen Kunststoffmaterialien, wie z.B. reine Kunststoffrohre (ein- oder mehrschichtig) oder mehrschichtige Kunststoff/Metall-Verbundrohre, wie sie im Heizungs- und Sanitärbereich Verwendung finden.

Die Erfindung wird nachfolgend anhand der Zeichnung näher erläutert, Im einzelnen zeigen:
- Fig. 1: die Ausgangssituation vor dem Anschluss eines Rohrendes an den Klemmfitting, wobei die Einzelteile des Klemmfittings teilweise im vormontierten Zustand gezeigt sind,
- Fig. 2: die Situation bei der Montage, in der das anzuschließende Rohrende bereits in den Zwischenraum zwischen den Klemmring und der Stützhülse des Fittingkörpers eingeschoben ist,
- Fig. 3: den Zustand des Fittingkörpers zu Beginn der Verschraubung der Überwurfmutter mit dem Fittingkörper-Gegenstück und
- Fig. 4: die Situation bei vollständig verschraubtem Klemmfitting.

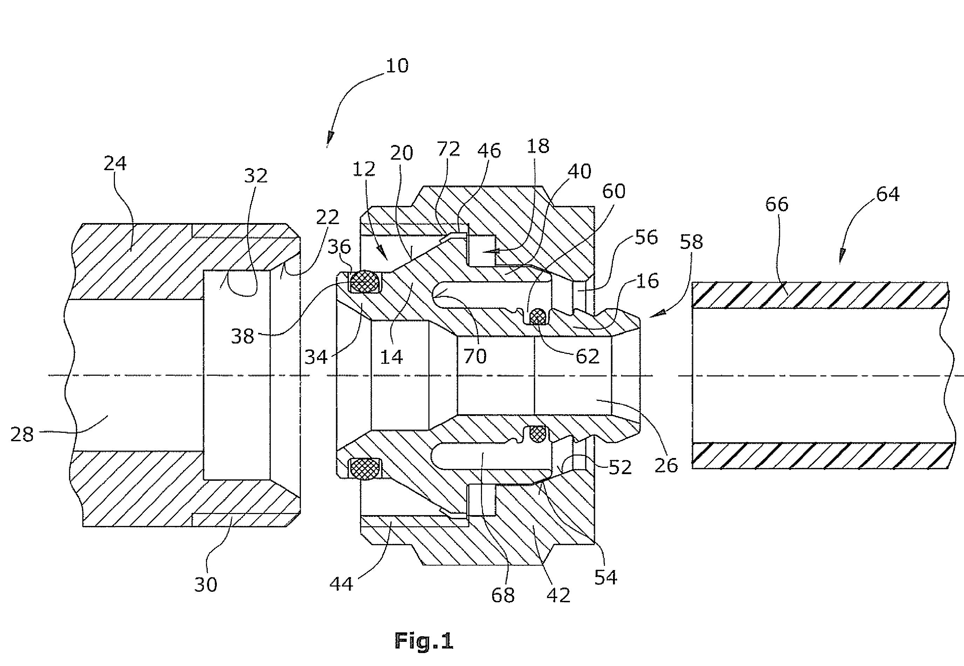

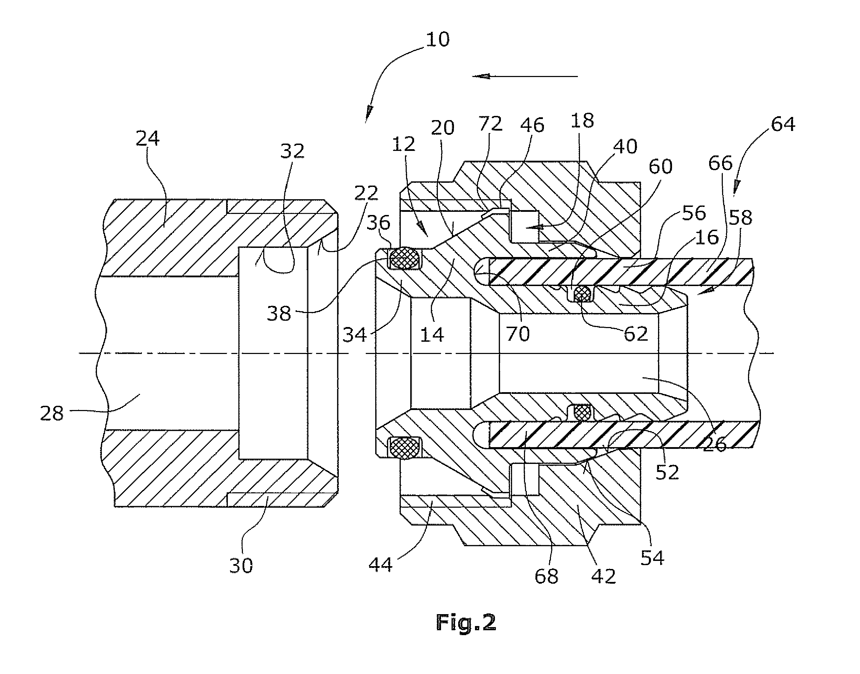

In den Fign. 1 bis 4 sind verschiedene Schnittansichten eines Ausführungsbeispiels eines Klemmfittings 10 gezeigt. Gemäß Fig. 1 weist der Klemmfitting 10 einen Fittingkörper 12 aus in diesem Ausführungsbeispiel einem insbesondere faserverstärkten Kunststoffmaterial (vorzugsweise hochtemperaturfest) auf, der einen sich konisch aufweitenden Kragen 14 aufweist, innerhalb dessen sich eine konzentrisch dazu ausgebildete Stützhülse 16 angeordnet ist, die über das Ende 18 des Kragens 14 axial übersteht. Die Außenfläche des Kragens 14 ist konusförmig und bildet eine Anlagefläche 20, über die der Fittingkörper 12 an einer ebenfalls konusförmigen Aufnahmefläche 22 eines Fittingkörper-Gegenstücks 24 anliegt. Der Fittingkörper 12 und das Gegenstück 24 weisen jeweils Fluiddurchlässe 26,28 auf. Das Gegenstück 24, das beispielsweise aus Metall besteht, ist darüber hinaus an seinem die Aufnahmefläche 22 aufweisenden Ende mit einem Außengewinde 30 versehen. An die Aufnahmefläche 22 des Gegenstücks 24 schließt sich eine zylindrische Dichtfläche 32 an, die mit einem sich an die konische Anlagefläche 20 des Fittingkörpers 12 anschließenden Fortsatz 34 dichtend zusammenwirkt. Im Bereich des Fortsatzes 34 weist der Fittingkörper 12 eine in radialer Richtung geöffnete Umfangsnut 36 mit einem darin angeordneten ringförmigen Dichtelement 38 aus einem elastomeren Material auf. Um die Stützhülse 16 des Fittingkörpers 12 herum ist ein Klemmring 40 angeordnet, der in diesem Ausführungsbeispiel aus Kunststoff und insbesondere faserverstärktem und hochtemperaturfestem Kunststoff besteht. Der Klemmring 40 kann geschlossen oder geschlitzt ausgebildet sein, Die Besonderheit besteht darin, dass die Stützhülse 16 und der Klemmring 40 einteilig ausgeführt sind. Mit anderen Worten bilden also Fittingkörper 12, Stützhülse 16 und Klemmring 40 eine einzige Einheit 41. Fittingkörper 12, Stützhülse 16 und Klemmring 40 befinden sich innerhalb einer Überwurfmutter 42 aus vorzugsweise Metall, die mit einem Innengewinde 44 versehen ist, das in Gewindeeingriff mit dem Außengewinde 30 des Gegenstücks 24 gebracht werden kann. Über den Umfang des Fittingkörpers 12 im Bereich von dessen Kragenende 18 befinden sich radial auswärts weisende Vorsprünge 46, die klemmend mit dem Innengewinde 44 zusammenwirken und dafür sorgen, dass der Fittingkörper 12, nachdem er erstmalig in die Überwurfmutter 42 eingebracht worden ist, dort gehalten wird. Damit sind also Fittingkörper 12 und Klemmring 40 mit der Überwurfmutter 42 vormontierbar und als Einheit handhabbar, was sowohl den Transport als auch die Montage des Klemmfittings 10 vereinfacht.

Wie anhand von Fig. 1 zu erkennen ist, weist der Klemmring 40 eine in etwa trapezförmige Querschnittsfläche auf und ist mit einer an der Innenfläche 48 des Fittingkörper-Kragens 14 anliegenden ersten Schrägfläche 50 und mit einer an einer konischen Innenfläche 52 der Überwurfmutter 42 anliegenden zweiten Schrägfläche 54 versehen. Im übrigen Außenumfangsflächenbereich liegt der Klemmring 40 innen an der Überwurfmutter 42 an. Die konusförmige Fläche 52 der Überwurfmutter 42 geht in die Durchgangsöffnung 56 der Überwurfmutter 42 über. Konzentrisch durch diese Öffnung 56 erstreckt sich das dem Fittingkörper-Kragen 14 abgewandte axiale Ende 58 der Stützhülse 16, die mit einer radial auswärts weisenden Umfangsnut 60 versehen ist, welche ein ringförmiges Dichtelement 62 aus Elastomermaterial (beispielsweise Gummi) aufnimmt.

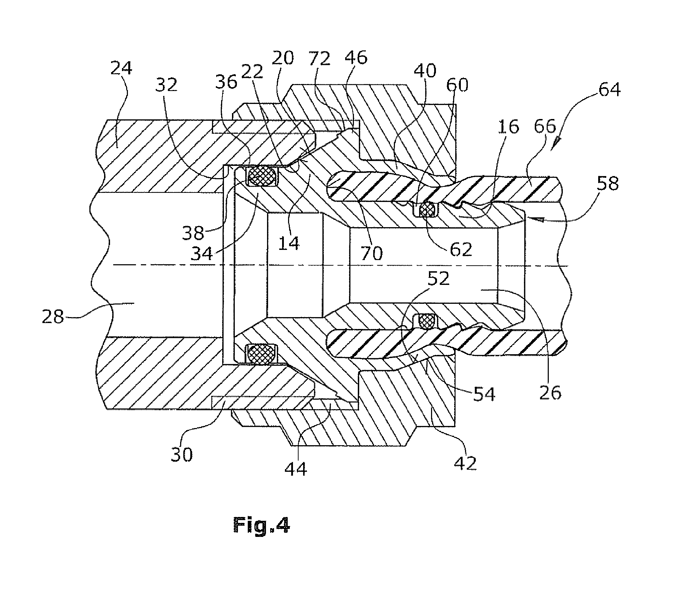

In Fig. 4 ist rechts das (Anschluss-)Ende 64 eines in diesem Ausführungsbeispiel aus Kunststoff bestehenden Rohres 66 gezeigt.

Zum Anschluss des Rohres 66 wird dieses durch die Durchgangsöffnung 56 hindurch in den Zwischenraum 68 zwischen der Stützhülse 16 und dem Klemmring 40 eingeschoben, bis es an dem Grund 70 des von dem Fittingkörper-Kragen 14 und der Stützhülse 16 gebildeten Aufnahmeraums anliegt. Alsdann wird die Überwurfmutter 42 auf das Gegenstück 24 aufgeschraubt. Diese Verschraubung kann bereits ansatzweise erfolgt sein, bevor das Rohr 64 durch die Öffnung 56 der Überwurfmutter 42 in den Klemmfitting 10 eingeschoben wird.

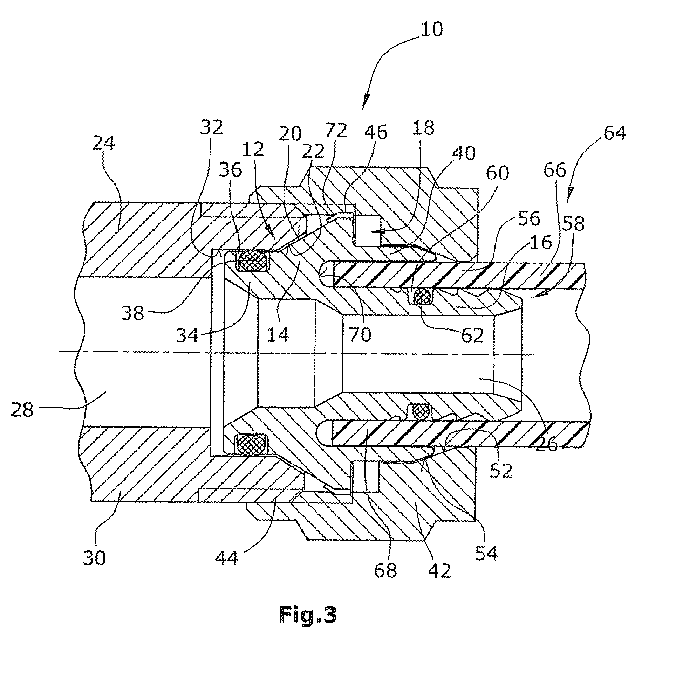

Im Verlauf der Verschraubung von Überwurfmutter 42 mit Gegenstück 24 stellt sich dann die Situation gemäß Fig. 3 ein, in der die konische Innenfläche 52 der Überwurfmutter 42 und die ebenfalls konische Innenfläche 48 des Fittingkörper-Kragens 14 gegen die korrespondierenden Schrägflächen 54 und 50 an der Außenseite des Klemmrings 40 leicht andrücken. Beim weiteren Verschrauben der Überwurfmutter 42 wird nun der Klemmring 40 über seine Schrägflächen radial von außen gegen das Rohrende 66 gedrückt, wodurch dieses wiederum gegen die Stützhülse 16 gepresst wird. Dabei verformt sich der Klemmring 40, wie etwa in Fig. 4 gezeigt, wodurch im Bereich der Durchgangsöffnung 56 der Überwurfmutter 42 und insbesondere im Bereich der konusförmigen Fläche 54 der Überwurfmutter 42 Material des Klemmrings 40 gelangt, der die Öffnung 56 unter teilweise Verdrängung des Materials des Rohres 64 verdrängt und somit für einen sicheren Sitz des Rohrendes 66 in dem Klemmfitting 10 und für eine zuverlässige Abdichtung des Rohres 64 gegenüber der Stützhülse 16 sorgt.

Wie anhand der Figuren ferner zu erkennen ist, sind die Fixiervorsprünge 46 des Fittingkörpers 12 bis in dessen konische Anlagefläche 20 verlängert. In diesem Bereich fungieren die Vorsprünge als Zentrier- bzw. Anschlagsvorsprünge 72, die ein zu tiefes Eintauchen des Fittingkörpers 12 in das Gegenstück 24 verhindern sollen, wenn der Konuswinkel der Aufnahmefläche 22 des Gegenstücks 24 größer als der Konuswinkel der Anlagefläche 20 des Fittingkörpers 12 ist. Diese Situation ist in den Figuren nicht dargestellt.

## Patentansprüche

1. Klemmfitting für ein Rohr, insbesondere Heizungs- und/oder Sanitärrohr, mit
- einem Fittingkörper (12), der eine Stützhülse (16), auf welche ein Rohrende (66) aufschiebbar ist, und eine konusförmige Anlagefläche (20) aufweist,
- einem Gegenstück (24) für den Fittingkörper (12), welches mit einer konusförmigen Aufnahmefläche (22) zur Anlage durch die Anlagefläche (20) des Fittingkörpers (12) versehen ist,
- einem Klemmring (40) zum Umgeben des auf die Stützhülse (16) aufschiebbaren Rohrendes (66) und
- einer ein Innengewinde (44) aufweisenden und mit dem Gegenstück (24) verschraubbaren Überwurfmutter (42) zum Andrücken des Klemmrings (40) gegen den Fittingkörper (12) und zur klemmenden Anlage an dem Rohrende (66) in dessen auf die Stützhülse (16) aufgeschobenen Zustand,
**dadurch gekennzeichnet ,**
- **dass** die Stützhülse (16) und der Klemmring (40) einteilig ausgebildet sind, wobei der Klemmring (40) ein radial stauchbares Material aufweist und/oder derart ausgebildet ist, dass er radial stauchbar ist.

2. Klemmfitting nach Anspruch 1, **dadurch gekennzeichnet, dass** der Klemmring (40) Kunststoff aufweist.

3. Klemmfitting nach Anspruch 1 oder 2, **dadurch gekennzeichnet, dass** die Stützhülse (16) und der Klemmring (40) einstückig hergestellt sind.

4. Klemmfitting nach einem der Ansprüche 1 bis 3, **dadurch gekennzeichnet, dass** der Klemmring (40) geschlitzt ist.

5. Klemmfitting nach Anspruch 4, **dadurch gekennzeichnet, dass** der Klemmring (40) axial geschlitzt ist.

6. Klemmfitting nach einem der Ansprüche 1 bis 3, **dadurch gekennzeichnet, dass** der Klemmring (40) in Umfangsrichtung geschlossen ist und einen dem Gegenstück (24) abgewandten geschlossenen Umfangsrand aufweist.

7. Klemmfitting nach einem der Ansprüche 1 bis 6, **dadurch gekennzeichnet, dass** der Fittingkörper (12) radial vorstehende Fixiervorsprünge (46) zur axialen Fixierung des Fittingkörpers (12) innerhalb der Überwurfmutter (42) an deren Innengewinde (44) oder anderen innenliegenden Flächenausgestaltungen gegen ein unbeabsichtigtes Ablösen der Überwurfmutter (42) vor deren Verschraubung mit dem Gegenstück (24) aufweist.

8. Klemmfitting nach Anspruch 7, **dadurch gekennzeichnet, dass** die konusförmige Anlagefläche (20) des Fittingkörpers (12) Zentrier- und/oder Anschlagsvorsprünge (72) zur Anpassung an ein Gegenstück (24) mit einem von dem Konuswinkel der Anlagefläche (20) abweichenden Konuswinkel seiner Aufnahmefläche (22) aufweist.

9. Klemmfitting nach Anspruch 7 oder 8, **dadurch gekennzeichnet, dass** die Überwurfmutter (42) und der Fittingkörper (12) konusförmige Andrückflächen (52,48) zum Zusammenwirken mit Schrägflächen (54,50) an den axialen Enden des Klemmrings (40) aufweisen und dass der Konuswinkel der Andrückfläche (48) des Fittingkörpers (12) kleiner ist als der der Andrückfläche (52) der Überwurfmutter (42).

10. Klemmfitting nach einem der Ansprüche 7 bis 9, **dadurch gekennzeichnet, dass** der Fittingkörper (12) und/oder der Klemmring (40) ein Kunststoffmaterial aufweist.

11. Klemmfitting nach Anspruch 10, **dadurch gekennzeichnet, dass** der Fittingkörper (12) und/oder der Klemmring (40) eine Faserverstärkung aufweist.

12. Klemmfitting nach einem der Ansprüche 7 bis 11, **dadurch gekennzeichnet, dass** die Stützhülse (16) mindestens eine Umfangsnut (60) mit einem von dieser aufgenommenen Dichtelement (62) zur dichtenden Anlage an der Innenfläche des Rohrendes (66) aufweist.

13. Klemmfitting nach einem der Ansprüche 7 bis 12, **dadurch gekennzeichnet, dass** der Fittingkörper (12) an seinem verjüngten Konusende eine Umfangsnut (36) mit einem von dieser aufgenommenen Dichtelement (38) zur dichtenden Anlage an der Innenfläche (32) des Gegenstücks (24) aufweist.
